# FASCICULE DE BREVET EUROPEEN

(11) **EP 2 932 429 B1**
(45) Date de publication et mention de la délivrance du brevet: **22.08.2018**
(21) Numéro de dépôt: 13815085.9
(22) Date de dépôt: 12.12.2013
(51) Int. Cl.: G06F 21/44, G06F 21/76

(54) **PROCÉDÉ DE SÉCURISATION D'UNE DEMANDE D'EXÉCUTION D'UNE PREMIÈRE APPLICATION PAR UNE DEUXIÈME APPLICATION**
VERFAHREN ZUR SICHERUNG EINER ANFRAGE ZUR AUSFÜHRUNG EINER ERSTEN ANWENDUNG DURCH EINE ZWEITE ANWENDUNG
METHOD FOR SECURING A REQUEST FOR EXECUTING A FIRST APPLICATION, BY A SECOND APPLICATION

(30) Priorité: 14.12.2012 FR 1262097
(43) Date de publication de la demande: 21.10.2015
(73) Titulaire: Orange, 75015 Paris (FR)
(72) Inventeur: WARY, Jean-Philippe, F-92340 Bourg La Reine (FR); MATHIAS, Christophe, F-92130 Issy Les Moulineaux (FR); LORANT, Guirec, F-75013 Paris (FR); ROSENTHAL, Jean-Pierre, F-92160 Antony (FR)
(86) Numéro de dépôt international: PCT/FR2013/053060
(87) Numéro de publication internationale: WO 2014/091168

(56) Documents cités:
- US-A1- 2009 249 080

## Description

L'invention concerne le domaine de la sécurité relative à des programmes informatiques. Plus précisément, l'invention concerne un procédé de sécurisation d'une demande d'exécution d'une première application par une deuxième application. La deuxième application, située dans un environnement non sécurisé fait appel à la première application, située dans un environnement sécurisé.

L'invention trouve une application particulièrement intéressante dans le cas d'un terminal ouvert auquel l'utilisateur a accès, dont il n'a aucune garantie sur la sécurité mise en oeuvre, et depuis lequel il souhaite accéder à une application sensible exécutée dans un environnement sécurisé et qui nécessite un niveau de sécurité important. On comprend que dans un tel cas, l'utilisateur hésite à exécuter l'application depuis un terminal qui n'est pas forcément sûr. Ce peut être le cas par exemple, lorsque l'utilisateur souhaite accéder, depuis son terminal mobile, à une application distante nécessitant une authentification de l'utilisateur, par exemple une application bancaire. En effet, l'utilisateur n'est pas assuré que lors de la saisie d'une donnée d'authentification requise par l'application, un programme espion, installé sur son terminal à son insu n'intercepte les données d'authentification qu'il saisit pour une utilisation frauduleuse ultérieure.

Pour avoir la garantie qu'une première et une deuxième application interagissent dans un environnement de confiance, il est connu de procéder à une authentification mutuelle entre les applications. Au cours d'une telle authentification, la première et la seconde application s'apportent mutuellement une preuve de leur identité respective. Une méthode connue d'authentification mutuelle repose sur l'utilisation de certificats électroniques de confiance, par exemple des certificats électroniques au format X.509. Un certificat X.509 est une carte d'identité numérique qui associe à une entité, par exemple une entité physique ou une application, une clé publique certifiée. La clé publique est associée à une clé privée détenue uniquement par l'entité. Le certificat est délivré par une Autorité de Certification au terme d'une procédure sécurisée. Le certificat comprend une pluralité de champs, dont la clé publique, l'identité du détenteur de la clé publique, l'identité de l'Autorité de Certification et les services pour lesquels le certificat est délivré, par exemple un service d'authentification. L'ensemble des champs du certificat est signé par l'Autorité de Certification au moyen d'une clé secrète de l'Autorité de Certification. Par cette opération de signature, l'Autorité de Certification certifie l'exactitude des données contenues dans le certificat. Ainsi, une fois le certificat délivré à une entité, celle-ci peut utiliser son couple de clés privée/publique et le certificat associé pour mettre en oeuvre des services d'authentification/des services pour lesquels le certificat a été émis. Par exemple, au cours d'une telle authentification une entité vérificatrice, par exemple la première application peut demander à l'entité à authentifier, par exemple la deuxième application, de signer un challenge. L'entité à authentifier signe le challenge au moyen de sa clé privée et transmet le challenge signé à l'entité vérificatrice. L'entité vérificatrice vérifie alors la signature au moyen du certificat de l'entité à authentifier, qui est une donnée publique : la clé publique qui y figure lui permet de vérifier la signature cryptographique en tant que donnée, le certificat lui permet de vérifier la validité de la clé publique. En effet, les données qui figurent dans le certificat permettent de remonter complètement une chaîne de certification jusqu'à une Autorité de Certification supérieure, dite Autorité Racine de confiance, et de vérifier la confiance accordée à chacun des maillons de cette chaîne de certification.

Cependant, le niveau de sécurité apporté par une authentification au moyen de certificats peut s'avérer insuffisant dans ce contexte. En effet, un équipement qui héberge la deuxième application, ou entité à authentifier, n'étant pas sécurisé, une personne malveillante peut altérer l'intégrité des procédures de vérification mises en oeuvre au moyen du certificat et ainsi porter atteinte à la sécurité du protocole mis en oeuvre entre la deuxième application dans l'environnement non sûr et la première application, ou entité vérificatrice, de l'environnement sécurisé. La personne malveillante peut aussi subtiliser les clés d'un certificat ou l'usage de celui-ci, voire modifier les clés et créer un certificat de son choix et ainsi, leurrer un système d'authentification. Par ailleurs, de récentes compromissions d'Autorités de Certification montrent qu'une telle infrastructure est faillible en termes de sécurité. Ainsi, actuellement il n'existe pas de solution satisfaisante d'authentification entre une première application, localisée dans un environnement de confiance et une deuxième application, localisée dans un environnement non sécurisé. Le document US2009/249081 décrit un procédé pour authentifier un circuit programmable. Un des buts de l'invention est de remédier à des insuffisances/inconvénients de l'état de la technique et/ou d'y apporter des améliorations. L'invention est définie dans les revendication ci-après. A cette fin, l'invention propose un procédé de sécurisation d'une demande d'exécution d'une première application par une deuxième application, la première application étant destinée à être exécutée par un premier dispositif dans un premier environnement sécurisé, la deuxième application étant destinée à être exécutée par un deuxième dispositif dans un deuxième environnement, distinct du premier environnement, ledit procédé comprenant les étapes suivantes, mises en oeuvre par le premier dispositif :
- réception d'une première demande d'exécution de la première application, en provenance de la deuxième application,
- génération d'un aléa pour ladite première demande d'exécution et d'une clé de session dépendant de l'aléa généré,
- envoi dudit aléa à une entité de confiance, ledit aléa étant destiné à permettre à l'entité de confiance de générer la clé de session,
- réception d'une deuxième demande d'exécution de la première application, en provenance d'une troisième application générée par l'entité de confiance et transmise au deuxième dispositif, ladite troisième application comprenant la clé de session, et
- authentification de la troisième application au moyen de la clé de session, ladite authentification conditionnant l'exécution de la première application.

Le procédé de l'invention permet ainsi de générer une troisième application qui s'interface avec l'application sécurisée du premier dispositif de manière à ce que l'application sécurisée et la troisième application s'exécutent dans un environnement dit de confiance. En particulier, la troisième application est réputée de confiance, bien qu'elle s'exécute sur le deuxième dispositif qui constitue un environnement non sécurisé, voire hostile. En effet, la troisième application, qui s'interface avec l'application sécurisée est authentifiée lorsqu'elle demande d'exécuter l'application sécurisée de l'environnement sécurisé.

Avec le procédé de l'invention, le code de la troisième application intègre un caractère aléatoire du fait de l'aléa utilisé lors de la génération du code. L'exécution de la troisième application varie donc d'une exécution à une autre. Certaines attaques, basées sur un reverse engineering du code exécuté sont donc inefficaces et une personne malintentionnée qui espionnerait l'activité du terminal mobile à l'insu de l'utilisateur ne pourrait déduire des observations de cette activité des informations sensibles de l'utilisateur, telles que des données d'authentification.

Avantageusement, le procédé selon l'invention comprend en outre une étape de génération d'un crypto-système, ledit crypto-système étant utilisé durant l'étape d'authentification.

Le crypto-système permet de sécuriser l'authentification en chiffrant une valeur d'authentification transmise par la troisième application lors de la deuxième demande d'exécution de l'application sécurisée.

Dans un exemple de réalisation, la génération du crypto-système comprend :
- une étape de sélection d'au moins deux fonctions cryptographiques parmi un ensemble de fonctions cryptographiques, ladite sélection étant fonction de l'aléa, et
- une étape de composition desdites opérations cryptographiques.

Dans cet exemple, la construction du crypto-système dépend de l'aléa et varie donc pour chaque génération de la troisième application. La sécurité de l'authentification est ainsi améliorée par rapport à un crypto-système constant. Ainsi, un logiciel espion installé dans l'environnement non sûr rencontrera quelques difficultés à espionner la phase d'authentification mise en oeuvre par la troisième application, plus précisément par des instances successives de la troisième application. En effet, du fait de la nature non prédictible du code de la troisième application, l'attaquant ne connaît pas à l'avance la forme, la structure et le contenu du code.

L'invention concerne aussi un procédé de transmission d'une application authentifiable à un premier dispositif dans un premier environnement, comprenant les étapes suivantes, mises en oeuvre par une entité de confiance :
- réception d'un aléa en provenance d'un deuxième dispositif dans un deuxième environnement, ledit deuxième environnement étant sécurisé et distinct du premier environnement, ledit aléa étant généré pour une première demande d'exécution d'une première application du deuxième dispositif, en provenance d'une deuxième application du premier dispositif,
- génération d'une clé de session dépendant de l'aléa,
- génération d'une application authentifiable au moyen de la clé de session,
- envoi de ladite application authentifiable au premier dispositif, ladite troisième application étant agencée pour s'authentifier auprès de la première application lors d'une deuxième demande d'exécution de la première application.

Le procédé de transmission d'une application authentifiable selon l'invention permet de générer une application unique, appelée troisième application. Cette troisième application est unique dans le sens où les instructions de code qui la composent sont différentes d'une génération d'application authentifiable à une autre, du fait de la prise en compte de l'aléa pour la génération de cette troisième application. Par ailleurs, la troisième application comprend des instructions de code pour mettre en oeuvre une authentification auprès de l'élément de sécurité, cette authentification conditionnant l'exécution de l'application sécurisée hébergée par le module de sécurité. Ainsi, cette troisième application, bien qu'exécutée dans un environnement non sécurisé, voire hostile, est considérée comme une application de confiance par l'élément de sécurité.

De façon avantageuse, le procédé de transmission d'une application authentifiable comprend en outre :
- l'envoi à un serveur d'un fournisseur de données de configuration, d'une demande de données de configuration propres à un utilisateur du premier dispositif,
- la réception de données de configuration, lesdits paramètres de configuration étant utilisés pour personnaliser l'application authentifiable durant l'étape de génération de l'application authentifiable.

La fourniture par le fournisseur de données de configuration, de données de configuration propres à l'utilisateur et utilisées pour la génération du code de la troisième application permet d'augmenter la confiance que l'utilisateur a lors de l'exécution de la troisième application sur un terminal situé potentiellement dans un environnement potentiellement hostile, par exemple un cybercafé. Par exemple, une telle donnée est une photo choisie par l'utilisateur et affichée sur le terminal de l'utilisateur lors de l'exécution de la troisième application. Dans un autre exemple de réalisation, la donnée de configuration permet de modifier les actions que l'utilisateur doit faire sur son terminal en introduisant des paramètres variables lors d'une saisie, par exemple, d'une information sensible tel qu'un code PIN de service. Dans ce dernier cas, la sécurité est ainsi améliorée dans le sens où l'observation par un logiciel espion des caractères saisis par l'utilisateur est rendue difficile du fait du caractère variable des caractères saisis.

L'invention porte également sur un dispositif sécurisé, hébergeant une première application, le dispositif comprenant :
- des moyens de réception, agencés pour recevoir une première demande d'exécution de la première application, en provenance d'une deuxième application, la deuxième application étant hébergée par un deuxième dispositif, distinct du dispositif sécurisé, et pour recevoir une deuxième demande d'exécution de la première application en provenance d'une troisième application générée par une entité de confiance et transmise au deuxième dispositif, ladite troisième application comprenant une clé de session,
- des moyens de génération, agencés pour générer un aléa pour la première demande d'exécution et la clé de session dépendant de l'aléa généré,
- des moyens d'envoi, agencés pour envoyer ledit aléa à l'entité de confiance, ledit aléa étant destiné à permettre à l'entité de confiance de générer la clé de session,
- des moyens d'authentification, agencés pour authentifier la troisième application au moyen de la clé de session, l'authentification de la troisième application conditionnant l'exécution de la première application.

L'invention concerne aussi un terminal mobile qui comprend un dispositif sécursié selon l'invention.

L'invention concerne aussi une entité de confiance d'un réseau, agencée pour générer et transmettre une application authentifiable à un premier dispositif d'un premier environnement, ladite entité comprenant :
- des moyens de réception, agencés pour recevoir un aléa en provenance d'un deuxième dispositif dans un deuxième environnement, ledit deuxième environnement étant sécurisé et distinct du premier environnement, ledit aléa étant généré pour une première demande d'exécution d'une première application du deuxième dispositif, en provenance d'une deuxième application du premier dispositif,
- des premiers moyens de génération, agencés pour générer une clé de session dépendant de l'aléa,
- des deuxièmes moyens de génération, agencés pour générer une application authentifiable au moyen de la clé de session,
- des moyens d'envoi, agencés pour envoyer ladite application authentifiable au premier dispositif, ladite troisième application étant agencée pour s'authentifier auprès de la première application lors d'une deuxième demande d'exécution de la première application.

L'invention concerne aussi un système de sécurisation de l'exécution d'une application, comprenant une entité de confiance selon l'invention, et au moins un dispositif sécurisé selon l'invention.

L'invention porte également sur un programme sur un support de données et chargeable dans une mémoire d'un dispositif sécurisé, le programme comprenant des portions de code pour l'exécution des étapes du procédé de sécurisation d'une demande d'exécution d'une première application par une deuxième application selon l'invention, lorsque le programme est exécuté sur ledit dispositif.

L'invention concerne également un support de données sur lequel est enregistré le programme précédent.

L'invention concerne aussi un programme sur un support de données et chargeable dans une mémoire d'un ordinateur, le programme comprenant des portions de code pour l'exécution des étapes du procédé de transmission d'une application authentifiable selon l'invention, lorsque le programme est exécuté sur ledit ordinateur.

L'invention porte aussi sur un support de données sur lequel est enregistré le programme d'ordinateur précédent.

De nombreux détails et avantages de l'invention seront mieux compris à la lecture de la description d'un mode particulier de réalisation en référence aux dessins annexés donnés à titre non limitatif, et dans lesquels :
- la figure 1 présente les étapes d'un procédé de sécurisation d'une demande d'exécution d'une première application par une deuxième application, selon un premier exemple de réalisation ;
- la figure 2 est une représentation schématique d'un élément de sécurité, selon un premier exemple de réalisation ;
- la figure 3 est une représentation schématique d'une entité de confiance, selon un premier exemple de réalisation.

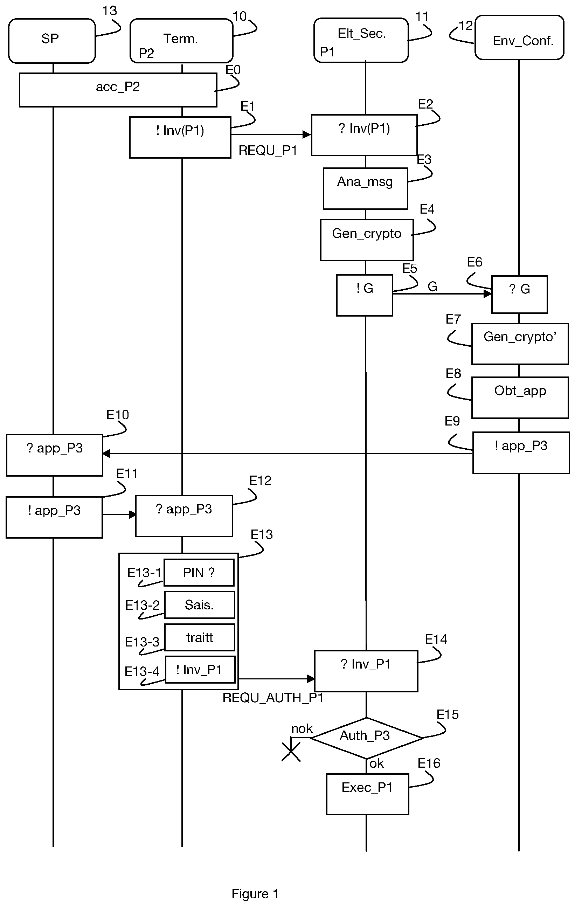

Les étapes d'un procédé de sécurisation d'une demande d'exécution d'une première application par une deuxième application, selon un premier exemple de réalisation vont maintenant être décrites en relation avec la figure 1.

Le procédé est illustré ici dans le cadre d'un service d'achat en ligne proposé par un fournisseur de service 13.

Un utilisateur (non représenté sur la figure 1) détenteur d'un terminal mobile 10 souhaite accéder depuis son terminal mobile 10 à un service d'achat en ligne proposé par le fournisseur de services 13. Ce service nécessite l'exécution d'une application sécurisée. Le terminal mobile 10 est un terminal ouvert et constitue de ce fait un environnement logiciel réputé non sécurisé, sur lequel des logiciels espions peuvent être installés, ou dont le contrôle peut être pris par une personne malveillante. Un élément de sécurité 11, inséré dans le terminal mobile 10 constitue un environnement sécurisé. Un environnement sécurisé est un environnement dans lequel des applications, des données sont stockées de manière sécurisée. Un tel environnement est par exemple une carte « SIM » (de l'anglais « Subscriber Identity Module »), ou une carte « UICC » (pour « Universal Integrated Circuit Card »). L'accès à l'environnement sécurisé constitué par la carte SIM est de manière classique protégé par un contrôle d'accès, tel qu'un code « PIN » (de l'anglais « Personal Identification Number ») d'accès à la carte SIM. L'utilisateur souhaite exécuter, depuis son terminal mobile 10 une première application P1, dite application sécurisée, installée dans l'élément de sécurité 11. Pour ce faire, l'utilisateur accède par exemple à un menu depuis son terminal mobile 10, ledit menu lui permettant de sélectionner et d'exécuter une deuxième application P2, dite application non sécurisée puisque exécutée depuis l'environnement non sécurisé. La sélection et l'exécution de l'application P2 depuis le terminal mobile 10 déclenche une demande d'exécution de l'application sécurisée P1, installée dans l'élément de sécurité 11. L'application P2 est par exemple une application relative à un service de paiement dont l'exécution est conditionnée par une authentification réussie de l'utilisateur réalisée à partir de l'application P2 par un programme localisé sur la carte SIM. En d'autres termes, l'application P2, localisée sur le terminal 10, lorsqu'elle s'exécute, demande l'exécution de l'application sécurisée P1 localisée dans l'élément de sécurité 11. Dans notre exemple, l'application sécurisée P1 correspond à une application de paiement, qui dans ses premières étapes demande à authentifier l'utilisateur au moyen par exemple d'une saisie d'un code « PIN » de service.

Ainsi, dans une étape initiale E0, l'utilisateur demande à exécuter une application P2 depuis son terminal mobile 10. Par exemple, l'utilisateur accède à un menu de son terminal mobile 10 qui comprend une pluralité d'applications, il sélectionne l'application P2 qu'il souhaite lancer, puis valide son choix. L'application P2 est par exemple un service d'achat en ligne proposé par le fournisseur de service 13 et comprend l'accès au fournisseur de service 13, au moyen d'un accès Internet. Dans cet exemple, l'utilisateur accède donc à l'application P2 depuis son terminal mobile 10 au moyen d'un navigateur web. Dans de premiers échanges avec le fournisseur de service 13, l'utilisateur initie une transaction et choisit un ou plusieurs articles qui constituent ce que l'on appelle habituellement un panier. Une validation de son panier est alors suivie d'une phase destinée à valider le paiement du panier. Cette phase, sensible, nécessite une validation du montant du panier par l'utilisateur et une authentification de celui-ci.

A cette fin, dans une étape E1 d'envoi d'une requête, déclenchée au cours de l'exécution de l'application P2 sur le terminal mobile 10, une requête REQU_P1 de demande d'exécution de l'application sécurisée P1 est envoyée à l'élément de sécurité 11. Dans le cas du service d'achat en ligne, la requête REQU_P1 est une requête de paiement qui comprend des paramètres propres à la transaction en cours et à son environnement d'exécution. Par exemple, les paramètres de la transaction comprennent un identifiant de transaction, un montant de transaction, un identifiant du service d'achat, un identifiant d'utilisateur, par exemple un numéro « MSISDN » (de l'anglais « Mobile Station ISDN Number ») de l'abonné, ou numéro « connu du public », des caractéristiques techniques du terminal mobil 10 sous forme par exemple d'un numéro « IMEI » (de l'anglais « International Mobile Equipment Identity »), et un identifiant unique du fournisseur de service 13. L'identifiant unique du fournisseur de service 13 est destiné à router des requêtes vers ce fournisseur de service ; ce peut être une « URL » (pour « Uniform Resource Locator »), une adresse IP, etc. Les caractéristiques techniques du terminal mobile 10 sont destinées à fournir des informations techniques propres au terminal mobile 10 : type de terminal, taille de l'écran, taille mémoire, etc. La requête REQU_P1 est destinée à déclencher l'exécution de l'application sécurisée P1 dans l'élément de sécurité 11. L'application P1 est ici une application de paiement qui comprend par exemple une phase de saisie d'un code PIN de service. La saisie d'un code PIN de service correct est nécessaire pour débloquer l'usage d'une clé secrète stockée dans l'élément de sécurité pour exécuter une opération de signature cryptographique de la transaction en cours.

Dans une étape E2 de réception, l'élément de sécurité 11 reçoit ladite requête REQU_P1 de demande d'exécution de l'application sécurisée P1. Plus précisément, un programme actif de supervision (non représenté sur la figure 1) de l'élément de sécurité 11 est adapté pour recevoir des messages envoyés à l'élément de sécurité 11 et pour les analyser. Il reçoit en particulier la requête REQU_P1.

Dans une étape E3 d'analyse, le programme de supervision de l'élément de sécurité 11 analyse la requête d'exécution REQU_P1 et lui associe un contexte courant, propre à l'exécution de service au sein de l'environnement sécurisé 11, initiée depuis le terminal mobile 10. Le contexte d'exécution comprend plusieurs informations, dont un identifiant unique de contexte d'exécution, les paramètres propres à la transaction reçus du terminal mobile 10 au cours de l'étape E2 de réception et un identifiant technique de l'élément de sécurité 11. Cet identifiant technique de l'élément de sécurité 11 est par exemple le numéro « IMSI » (de l'anglais « International Mobile Subscriber Identity ») stocké dans l'élément de sécurité 11, le numéro MSISDN, ou le cas échéant une adresse IP de l'élément de sécurité 11. Cet identifiant technique est destiné à communiquer avec l'élément de sécurité 11. L'analyse de la requête REQU_P1 montre qu'une exécution de l'application sécurisée P1, stockée dans l'élément de sécurité 11, est requise.

Dans une étape E4 de génération d'un matériel cryptographique, il est généré par le programme de supervision, pour la requête d'exécution REQU_P1 courante, un matériel cryptographique. Le matériel cryptographique comprend une valeur aléatoire G, un crypto-système C et une clé de session Kₛₑₛₛ. La valeur aléatoire G est une suite de bits, de taille importante, par exemple supérieure à 1100 bits et générée au moyen par exemple d'un générateur pseudo-aléatoire. La clé de session Kₛₑₛₛ, d'une taille donnée, par exemple 128 bits est générée à partir de la valeur aléatoire G. Par exemple, la clé de session Kₛₑₛₛ correspond aux 128 premiers bits de poids fort de la valeur aléatoire G, ou aux 128 premiers bits pairs de la valeur aléatoire G, ou tout autre opération effectuée à partir d'un sous ensemble de bits de G. Le crypto-système C comprend au moins une fonction cryptographique de chiffrement. Dans cet exemple de réalisation, le crypto-système C est composé d'un algorithme cryptographique à clé secrète, par exemple l'algorithme « AES » (de l'anglais « Advanced Encryption Standard »). Le crypto-système C est destiné à produire au moins une valeur d'authentification destinée à être présentée lors d'une demande d'exécution ultérieure de l'application sécurisée P1 par une troisième application P3 depuis le terminal mobile 10. A cette fin, le crypto-système C est agencé pour être paramétré par la clé de session Kₛₑₛₛ en tant que clé secrète de la fonction cryptographique de chiffrement, et pour produire, à partir d'un paramètre d'entrée, la valeur d'authentification. Par exemple, le paramètre d'entrée est un challenge. Dans un deuxième exemple de réalisation, le paramètre d'entrée est constitué par des paramètres d'appel de l'application sécurisée P1. Dans un troisième exemple de réalisation, le paramètre d'entrée est une instruction de demande d'exécution de l'application sécurisée P1. Ainsi, le programme de supervision de l'élément de sécurité 11 est apte à déchiffrer un contenu chiffré au moyen du crypto-système C paramétré par la clé de session Kₛₑₛₛ. Le programme de supervision de l'élément de sécurité 11 mémorise la clé de session Kₛₑₛₛ et le crypto-système C en association avec l'identifiant du contexte d'exécution courant.

Dans une étape E5 de transmission à une entité de confiance 12, l'élément de sécurité 11, plus précisément le programme de supervision, transmet à l'entité de confiance 12, un message de génération comprenant la valeur aléatoire G générée lors de la réception de la requête d'exécution REQU_P1 au cours de l'étape E3, un identifiant de l'application sécurisée P1 et le contexte courant, propre à l'exécution de service en cours au sein de l'élément de sécurité 11. Dans l'exemple de réalisation décrit ici, la transmission du message est effectuée au moyen d'au moins un « SMS » (de l'anglais « Short message Service »). Le message est reçu par l'entité de confiance 12 au cours d'une étape E6 de réception. On suppose que le canal de transmission entre l'environnement sécurisé 11 et l'entité de confiance 12 est sécurisé. Dans cet exemple de réalisation, l'entité de confiance 12 comprend un serveur d'un opérateur de réseau mobile auquel l'utilisateur est abonné. Un tel réseau est par exemple le réseau « GSM » (de l'anglais « Global System for Mobile communications »). Il est connu qu'une communication établie dans un réseau mobile bénéficie d'un niveau de sécurité inhérent à ce type de communication : authentification entre le réseau radio et l'élément de sécurité, et chiffrement de la voie radio.

Dans une étape E7 de génération du matériel cryptographique, l'entité de confiance 12 génère la même clé de session Kₛₑₛₛ et le même crypto-système C que ceux générés dans l'élément de sécurité 11 au cours de l'étape E4. A cette fin, l'entité de confiance 12 utilise la valeur aléatoire G reçue de l'élément de sécurité 11 et applique les mêmes règles que celles utilisées par l'élément de sécurité 11 pour générer la clé de session Kₛₑₛₛ et le crypto-système C. On comprend que l'entité de confiance 12 dispose des mêmes données que l'élément de sécurité 11 pour générer ces éléments. Ainsi, en fin d'étape E7 de génération, l'entité de confiance 12 dispose de la valeur aléatoire G, reçue de l'environnement de confiance 12, de la clé de session Kₛₑₛₛ et du crypto-système C qu'elle a générés. Elle dispose également du contexte courant d'exécution et de l'identifiant de l'application sécurisée P1. A ce stade, l'élément de sécurité 11 et l'entité de confiance 12 partagent des conventions, en l'espèce la clé de session Kₛₑₛₛ et le crypto-système C.

Dans une étape E8 d'obtention d'une application, l'entité de confiance 12 génère une troisième application P3 à partir de la clé de session Kₛₑₛₛ, du crypto-système C, du contexte d'exécution courant et de l'identifiant de l'application P1. La troisième application P3, destinée à être installée et exécutée sur le terminal mobile 10, comprend des instructions d'un code de programme adaptées pour s'interfacer avec l'application sécurisée P1 de manière sécurisée. En particulier la troisième application P3 comprend des instructions de code pour s'authentifier auprès de l'environnement sécurisé 11 puis pour demander l'exécution de l'application sécurisée P1. Par exemple, dans le cas où l'application sécurisée P1 est une application de paiement, qui a besoin d'un code PIN de service pour débloquer l'accès à une clé secrète et pour mettre en oeuvre une opération de signature au moyen de cette clé secrète, alors la troisième application P3 générée comprend des instructions de code permettant la saisie du code PIN sur le terminal mobile 10 de l'utilisateur, ainsi qu'une mise en forme du code PIN saisi. On entend par mise en forme du code PIN saisi une préparation du code PIN pour envoi à l'élément de sécurité 11. Dans l'exemple décrit ici, la mise en forme correspond à un chiffrement du code PIN saisi à l'attention de l'application sécurisée P1 au moyen du matériel cryptographique généré par l'entité de confiance 12 au cours de l'étape E7, en l'espèce le crypto-système C et la clé de session Kₛₑₛₛ. Le chiffrement du code PIN saisi par le crypto-système C au moyen de la clé de session Kₛₑₛₛ est destiné à mettre en oeuvre une authentification implicite de la troisième application P3 par l'élément de sécurité 11, et donc par l'application sécurisée P1. En effet, la troisième application P3 et l'élément de sécurité 11 partagent la connaissance de la clé de session Kₛₑₛₛ et du crypto-système C. Une authentification implicite est de ce fait réalisée dès lors que le déchiffrement de la donnée transmise du terminal mobile 10 à l'élément de sécurité 11 s'effectue correctement. Pour générer la troisième application P3, on suppose que l'entité de confiance 12 dispose d'une bibliothèque de programmes dans laquelle elle peut trouver, en association avec l'identifiant de l'application sécurisée P1 et les caractéristiques techniques du terminal mobile 10 comprises dans le contexte courant d'exécution, au moins un programme qui correspond à un code de programme adapté pour s'exécuter sur le terminal mobile 10 et pour s'interfacer avec l'application sécurisée P1.

Une telle troisième application P3 peut être générée par l'entité de confiance 12 au moyen d'un compilateur agencé pour produire un code exécutable à partir de la clé de session Kₛₑₛₛ, du crypto-système C et du programme stocké dans la bibliothèque de programmes en association avec l'application sécurisée P1 et les caractéristiques techniques du terminal mobile 10. Le code de la troisième application P3 dépend de la clé de session Kₛₑₛₛ. Il est donc différent à chaque exécution du service d'achat sur le terminal mobile 10.

Dans une étape E9 d'envoi de l'application, l'entité de confiance 12 envoie la troisième application P3 ainsi que le contexte d'exécution courant au fournisseur de service 13. L'identifiant unique du fournisseur de service 13, compris dans le contexte d'exécution courant reçu de l'élément de sécurité 11 permet à l'entité de confiance 12 d'envoyer la troisième application P3 au fournisseur de service 13. L'envoi de la troisième application P3 au fournisseur de service 13 s'effectue via une transmission sécurisée selon une méthode connue. La troisième application P3 est par exemple envoyée au fournisseur de service 13 en utilisant un protocole sécurisé, par exemple HTTPS. La troisième application P3 est reçue par le fournisseur de service 13 au cours d'une étape E10 de réception.

Dans une étape E11 d'envoi au terminal mobile, le fournisseur de service 13 envoie la troisième application P3 au terminal mobile 10. A cette fin, il génère une page web comprenant un lien de téléchargement automatique de la troisième application P3, et envoie cette page au terminal mobile 10. La page est reçue par le terminal mobile 10 au cours d'une étape E12 de réception. De préférence, la troisième application P3 est signée par le fournisseur de service 13.

Dans une étape E13 de commande d'exécution, consécutive à la réception de la page comprenant le lien de téléchargement de la troisième application P3, la page reçue est affichée et la troisième application P3 est automatiquement, c'est-à-dire sans intervention de l'utilisateur, exécutée sur le terminal mobile 10. Cet affichage et l'exécution de la troisième application P3 sont transparents pour l'utilisateur. En effet, dans le cas où le code de la troisième application P3 est signé par l'entité de confiance 12, l'exécution sur le terminal mobile 10 n'est pas soumise à une autorisation de l'utilisateur dès lors que le certificat de l'entité de confiance est déjà installé sur le terminal mobile 10 de l'utilisateur. A cette fin, on peut prévoir, dans une phase préalable d'initialisation, mise en oeuvre lors de la première exécution du service d'achat proposé par le fournisseur de service 13 sur le terminal mobile 10 de l'utilisateur, l'envoi du certificat de l'entité de confiance 12 au terminal mobile de l'utilisateur pour installation. L'envoi du certificat n'est pas destiné ici à améliorer la sécurité mais à fluidifier l'exécution de la troisième application P3 du point de vue de l'utilisateur. Dans l'exemple du service d'achat en ligne décrit ici, l'exécution de la troisième application déclenche dans une sous-étape E13-1 de demande, une demande à l'utilisateur de saisie d'un code PIN de service sur une interface homme-machine du terminal mobile 10. Par exemple, une fenêtre de saisie de code PIN de service est affichée sur l'écran du terminal mobile 10. Dans une sous-étape E13-2 de saisie, l'utilisateur saisit son code PIN de service sur le clavier du terminal mobile 10. Dans une étape E13-3 de traitement, la troisième application P3 calcule une valeur d'authentification à l'attention de l'application sécurisée P1. Par exemple, la valeur d'authentification est obtenue par chiffrement du code PIN de service saisi au moyen du crypto-système C paramétré par la clé de session Kₛₑₛₛ. Dans un autre exemple de réalisation, d'autres données peuvent être utilisées en complément du code PIN de service saisi pour calculer la valeur d'authentification : l'identifiant de contexte, ou/et toute information contenue dans le contexte et connue de l'environnement sécurisé 11. Dans une étape E13-4 de demande d'exécution, la troisième application P3 envoie à l'élément de sécurité 11 une deuxième requête de demande d'exécution RLQU_AUTH_P1 de l'application sécurisée P1, avec la valeur d'authentification calculée et l'identifiant du contexte d'exécution courant. Les sous-étapes E13-1 de demande, E13-2 de saisie, E13-3 de traitement et E13-4 de demande d'exécution sont des sous-étapes exécutées dans le cadre de l'exécution de la troisième application P3. La deuxième requête REQU_AUTH_P1 de demande d'exécution de l'application sécurisée P1 est reçue par l'élément de sécurité 11 au cours d'une étape E14 de réception.

Dans une étape E15 d'authentification, le programme de supervision authentifie la deuxième requête reçue REQU_AUTH_P1. A cette fin, le programme de supervision de l'élément de sécurité 11 déchiffre la valeur d'authentification transmise dans la deuxième requête d'exécution REQU_AUTH_P1 par la troisième application P3 en appliquant le crypto-système C paramétré par la clé de session Kₛₑₛₛ. Il obtient la clé de session Kₛₑₛₛ et le crypto-système C à partir de l'identifiant de contexte auquel ces données ont été associées au cours de l'étape E4 de génération du matériel cryptographique. Si la valeur d'authentification déchiffrée est correcte (branche « ok » sur la figure 1), cela signifie que le code PIN de service obtenu par déchiffrement de cette valeur est correct. Ce code PIN de service permet alors l'exécution de l'application sécurisée P1 au cours d'une étape E16 d'exécution. Si la valeur d'authentification déchiffrée n'est pas correcte (branche « nok » sur 1 a figure 1), le procédé s'arrête. Le déchiffrement de la valeur d'authentification constitue une authentification implicite de la troisième application P3 par l'élément de sécurité 11. Il constitue donc une authentification implicite de la troisième application P3 auprès de l'application sécurisée P1. En effet, si le déchiffrement s'effectue correctement, alors cela signifie que l'élément de sécurité 11 et la troisième application P3 partagent la même clé de session Kₛₑₛₛ et le même crypto-système C. Dans le cas où la valeur d'authentification est le code PIN de service chiffré, le programme de supervision fournit cette donnée déchiffrée à l'application P1, en attente d'un code PIN de service. Dans le cas où la valeur d'authentification comprend des données comprises dans le contexte d'exécution courant, l'authentification de la troisième application P3 est réalisée dès lors que le programme de supervision identifie les données déchiffrées dans le contexte courant. Dans le cas où l'application sécurisée P1 est une application de paiement, le succès de l'authentification de la troisième application P3 permet de débloquer l'accès à la clé secrète et de mettre en oeuvre l'opération de signature de la transaction afin de valider le paiement. Ainsi, l'authentification de la troisième application P3 conditionne l'exécution de l'application sécurisée P1.

Ainsi, avec le procédé de l'invention, l'application sécurisée P1 et la troisième application P3 s'exécutent dans un environnement dit de confiance. En particulier, la troisième application P3 est réputée de confiance, bien que s'exécutant dans un environnement non sécurisé, voire hostile.

Dans l'exemple de réalisation décrit, le crypto-système C est réduit à une fonction cryptographique symétrique. L'invention n'est pas limitée à une seule fonction. Ainsi, dans un autre exemple de réalisation, le crypto-système C est généré en choisissant plusieurs fonctions cryptographiques dans une bibliothèque de fonctions cryptographiques symétriques qui sont alors combinées. Dans un exemple de réalisation, les fonctions sont combinées au moyen d'une opération de OU EXCLUSIF. Dans un autre exemple de réalisation, les fonctions sont chaînées, le résultat d'une première fonction étant pris comme paramètre d'entrée d'une deuxième fonction. Le choix des fonctions cryptographiques destinées à générer le crypto-système C peut être dirigé par la valeur aléatoire G, et donc varier à chaque mise en oeuvre du procédé. Le choix des fonctions qui composent le crypto-système est alors aléatoire. Parmi ces fonctions cryptographiques figurent des algorithmes cryptographiques symétriques paramétrés par une clé secrète, par exemple AES, « DES » (de l'anglais «Data Encryption Standard »), 3DES. Des registres à décalage à rétroaction linéaire (l'acronyme habituellement utilisé est « LFSR » de l'anglais « Linear Feedback Shift Register ») peuvent également être utilisés pour engendrer des suites de nombres pseudo-aléatoires. Selon l'algorithme symétrique, des clés de différentes tailles peuvent être nécessaires. Dans ce cas, lors des étapes E4 et E7 de génération du matériel cryptographique, plusieurs clés de session pourront être générées à partir de l'aléa G. Dans un autre exemple de réalisation, des tables de permutation habituellement utilisées dans des algorithmes cryptographiques symétriques sont altérées d'une exécution à une autre de manière à éviter tout reverse engineering qui permettrait d'obtenir des informations sur la structure de la clé de session Kₛₑₛₛ.

Dans un autre exemple de réalisation de l'invention (non représenté), lorsque l'entité de confiance 12 reçoit de l'élément de sécurité 11, au cours de l'étape E5 de transmission à l'entité de confiance 12, l'aléa G et le contexte courant d'exécution, elle interroge un serveur d'un fournisseur de données de configuration pour obtenir des données de configuration propres à l'utilisateur. Le fournisseur de données de configuration peut être le fournisseur de service 13. Le serveur du fournisseur de données de configuration mémorise en association avec un identifiant de l'utilisateur des données de configuration propres à l'utilisateur et à l'application sécurisée P1. Ces données de configuration peuvent être utilisées par l'entité de confiance 12 lors de la génération de la troisième application P3 pour personnaliser la troisième application P3. Ainsi, dans un exemple de réalisation, une donnée de configuration est une image ou une photo choisie par l'utilisateur. Cette image ou cette photo est intégrée à la troisième application P3 et est affichée sur l'écran du terminal 10 de l'utilisateur lorsque la troisième application P3 est reçue et exécutée sur le terminal 10 au cours de l'étape E12. L'affichage de cette image ou photo est destinée à donner confiance à l'utilisateur lors de l'exécution de la troisième application P3. Ainsi, lorsque la troisième application P3 est une interface de saisie de code PIN de service sur le terminal mobile 10 de l'utilisateur, une personnalisation de cette application peut consister en une interface qui permet de rendre non prédictible la saisie des caractères du code PIN. Par exemple, cette interface peut proposer à l'utilisateur lors de la saisie du code PIN de service d'ajouter à chacun des chiffres saisis un chiffre affiché à l'écran. Ainsi, un logiciel espion qui mémoriserait la séquence de touches sélectionnées par l'utilisateur ne pourrait pas en déduire le code PIN de service. Une telle personnalisation de la troisième application P3 permet de donner confiance à l'utilisateur lorsque la troisième application P3 s'exécute, et le cas échéant de renforcer la sécurité.

Dans l'exemple décrit ici, le programme de supervision reçoit les première et deuxième requêtes d'exécution de l'application sécurisée P1, gère le contexte d'exécution courant, génère la clé de session Kₛₑₛₛ et le crypto-système C. Dans un autre exemple de réalisation correspondant à un cas où l'élément de sécurité 11 est dédié à l'application sécurisée P1 et n'héberge que cette application, alors c'est l'application sécurisée P1 qui reçoit les requêtes d'exécution, gère le contexte, procède au calcul du matériel cryptographique et à l'authentification de la troisième application P3 par déchiffrement de la valeur d'authentification reçue chiffrée.

Dans un autre exemple de réalisation, le matériel cryptographique généré et partagé entre l'élément de sécurité 11 et la troisième application P3 est utilisé pour construire un canal de communication sécurisé entre le terminal mobile 10 et l'élément de sécurité 11. A cette fin des protocoles connus tels que « SSL » (de l'anglais « Secure Socket Layer »), « IPSec » (pour « Internet Protocol Security ») peuvent être utilisés. Le canal peut ainsi être construit entre la troisième application P3 et l'environnement sécurisé 11. Ainsi, une sécurité de bout en bout est mise en oeuvre dans le cadre d'échanges ultérieurs entre la troisième application P3 et l'environnement sécurisé 11. A noter que l'on considère l'élément de sécurité 11 comme un environnement sécurisé. A l'intérieur de celui-ci, des éléments de sécurité gérés par le programme de supervision peuvent être transmis à l'application sécurisée P1 pour offrir une sécurité de bout en bout, c'est-à-dire jusqu'à l'application P1.

L'invention est décrite ici dans le cadre d'une application d'achat en ligne, sélectionnée et exécutée depuis le terminal mobile 10, et qui commande l'exécution d'une application de paiement sur la carte SIM, plus précisément d'une primitive cryptographique dans l'environnement sécurisé 11. L'invention n'est bien sûr pas limitée à une telle application. Le procédé s'applique également à tout type d'application qui nécessite l'exécution d'une application sécurisée sur l'élément de sécurité 11. Ainsi, le procédé peut s'appliquer également à des applications de santé qui nécessitent un accès contrôlé à des données personnelles de santé, à des applications de contrôle d'accès, qui nécessitent une authentification de l'utilisateur, à des applications bancaires, qui nécessitent pour des opérations sensibles une authentification de l'utilisateur. Plus généralement, l'invention s'applique à tout service qui demande l'exécution, à partir d'un environnement non sûr, tel qu'un terminal mobile, un PC, d'une application sensible localisée dans un environnement sécurisé. L'invention s'applique également à des services « NFC » (de l'anglais « Near Field Communication »), hébergés sur l'élément de sécurité et qui nécessitent une authentification de l'utilisateur avant d'être exécutées. Dans ce contexte, le procédé s'applique donc aussi à des applications NFC de type micro-paiement, des applications de contrôle d'accès à des bâtiments, de dématérialisation des titres de transport, etc.

L'élément de sécurité 11 décrit ici est une carte SIM ou une carte UICC. L'invention n'est pas limitée à ce type d'élément de sécurité. Ainsi, dans un autre exemple de réalisation, l'élément de sécurité 11 est une zone mémoire sécurisée du terminal mobile tel un composant « TEE » (de l'anglais « Trusted Execution Environment ») embarqué dans le processeur, ou un composant amovible de type microSD (« SD » pour SanDisk ®). Par ailleurs, dans l'exemple décrit ici, l'environnement sécurisé 11 est un dispositif physique sécurisé. L'invention n'est pas limitée à ce mode de réalisation. Ainsi, dans un autre exemple de réalisation l'élément de sécurité 11 est un environnement logiciel sécurisé, qui dispose des mêmes propriétés de sécurité qu'un environnement physique sécurisé. Par exemple, l'élément de sécurité est une carte SIM logicielle, gérée dans une base de données de cartes SIM logicielles, une carte SIM logicielle étant dédiée à un utilisateur. Cette base de données est protégée par des procédures de sécurité physique adaptées ; une telle base peut d'ailleurs être assimilé à un nuage de services de sécurité (le terme habituellement utilisé est le terme « cloud ») dans lequel des instances de l'application sécurisée P1 seraient dédiées à chaque utilisateur.

Dans un autre exemple d'architecture (non représenté), l'utilisateur possède un ordinateur personnel de type PC. Un dispositif réseau de type modem-routeur est adapté pour connecter au réseau Internet différents périphériques, dont le PC de l'utilisateur. Le modem-routeur est agencé pour que l'utilisateur insère un carte personnelle de type carte bancaire afin de mettre en oeuvre des services de paiement. L'invention peut avantageusement être appliquée pour sécuriser l'appel d'une fonction cryptographique de la carte de paiement à partir du PC de l'utilisateur.

L'invention trouve une application intéressante dans le cadre d'un service de maintenance à distance. Par exemple, un service de maintenance automobile à distance permet à un technicien, depuis un ordinateur de type PC, d'accéder à un véhicule équipé d'un module de sécurité. Ce module de sécurité est destiné à contrôler l'accès à un ordinateur de bord. L'ordinateur de bord permet de contrôler à distance, depuis l'ordinateur du technicien, une série de composants électroniques de la voiture, tels des capteurs, un système d'ouverture électronique de portes, etc. Il est connu que de tels PC sont copiés/volés, ce qui permet un accès au véhicule par une personne malintentionnée. Avec l'invention, l'accès au module de sécurité du véhicule depuis l'ordinateur du technicien déclenche une demande d'une troisième application, authentifiable par le module de sécurité du véhicule. Cette demande est transmise à l'ordinateur du technicien et relayée à un serveur de confiance du fabricant automobile. L'accès au serveur de confiance suppose une authentification du technicien. La troisième application est générée puis téléchargée dans l'ordinateur du technicien. Cette troisième application s'authentifie auprès du module de sécurité pour accéder à l'ordinateur de bord du véhicule. Le code de la troisième application est différent et authentifié à chaque exécution. Une personne malveillante qui aurait copié ou volé l'ordinateur du technicien ne pourrait donc l'utiliser pour accéder à l'ordinateur de bord du véhicule.

Dans l'exemple de réalisation décrit ici, la transmission du message de génération de l'environnement sécurisé 11 à l'entité de confiance 12 au cours de l'étape E5 de transmission est sécurisée au moyen de procédures inhérentes au réseau GSM. L'invention n'est pas limitée à l'utilisation de ces procédures et dans une autre réalisation de l'invention, dans lequel le module de sécurité 11 est conforme aux spécifications GlobalPlatform accessibles dans le document « Spécifications: GlobalPlatform Card spécifications v2.2.1 Public Release », les interfaces d'accès au module de sécurité définies dans ces spécifications sont utilisées

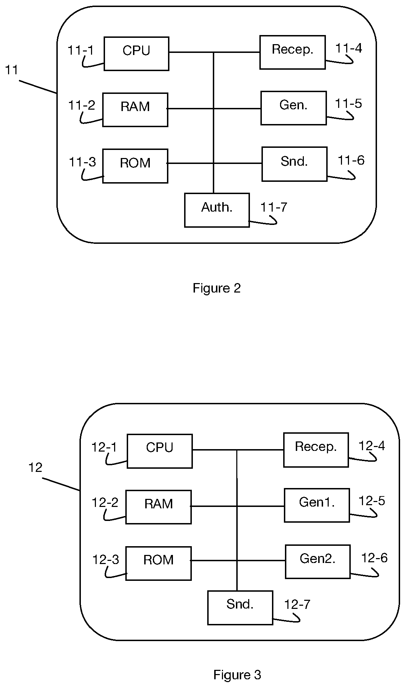

Un dispositif sécurisé 11 selon un premier exemple de réalisation de l'invention va maintenant être décrit en relation avec la figure 2. Dans l'exemple de réalisation décrit ici, le dispositif sécurisé 11 est une carte SIM insérée dans un terminal mobile d'abonné (non représenté sur la figure 2). Le dispositif sécurisé 11 selon l'invention comprend :
- un microprocesseur 11-1, ou "CPU" (de l'anglais "Central Processing Unit"), destiné à charger des instructions en mémoire, à les exécuter, à effectuer des opérations ;
- un ensemble de mémoires, dont une mémoire volatile 11-2, ou "RAM" (pour "Random Access Memory"), utilisée pour exécuter des instructions de code, stocker des variables, etc., et une mémoire de stockage 11-3 de type « EEPROM » (de l'anglais « Electrically Erasable Programmable Read Only Memory»). La mémoire de stockage 11-3 est agencée pour mémoriser l'application sécurisée P1. La mémoire de stockage mémorise également des données et applications spécifiques à l'abonné et au réseau mobile. Elle mémorise ainsi un identifiant de l'abonné, par exemple un numéro IMSI et des données de l'opérateur telles que des clés, des algorithmes cryptographiques ;

- des moyens de réception 11-4, agencés pour recevoir une première et une deuxième demande d'exécution de l'application sécurisée P1, stockée dans la mémoire de stockage 11-3 du dispositif sécurisé 11. La première et la deuxième demande d'exécution de l'application sécurisé P1 proviennent d'un deuxième dispositif, distinct du dispositif sécurisé 11. Plus précisément la première demande d'exécution provient d'une première application hébergée par le deuxième dispositif et la deuxième demande d'exécution provient d'une troisième application authentifiable par l'application sécurisée et hébergée également par le deuxième dispositif. Dans l'exemple décrit ici, le deuxième dispositif est le terminal mobile de l'abonné ;
- des moyens de génération 11-5, agencés pour générer l'aléa G pour la première demande d'exécution de l'application sécurisée, ainsi que la clé de session Kₛₑₛₛ qui dépend de l'aléa généré ;
- des moyens d'envoi 11-6, agencés pour envoyer ledit aléa à l'entité de confiance 12 (non représentée sur la figure 2). L'aléa G est destiné à permettre à l'entité de confiance 12 de générer la clé de session. Dans l'exemple décrit ici, les moyens d'envoi génèrent un message SMS qui comprend l'aléa G et utilisent l'interface radio du terminal mobile pour transmettre l'aléa à l'entité de confiance ;
- des moyens d'authentification 11-7, agencés pour authentifier la troisième application P3 au moyen de la clé de session, l'authentification de la troisième application conditionnant l'exécution de la première application.

Dans l'exemple de réalisation où le dispositif de sécurité est une carte SIM insérée dans un terminal mobile, les moyens de réception correspondent à une interface de communication entre le terminal mobile et la carte SIM.

Les moyens de réception 11-4, les moyens de génération 11-5 et les moyens d'envoi 11-6 sont de préférence des modules logiciels comprenant des instructions logicielles pour faire exécuter les étapes du procédé de sécurisation d'une demande d'exécution d'une première application par une deuxième application précédemment décrit.

L'invention concerne donc aussi :
- un programme comportant des instructions pour la mise en oeuvre du procédé de sécurisation d'une demande d'exécution d'une première application par une deuxième application tel que décrit précédemment lorsque ce programme est exécuté par le processeur du dispositif de sécurité 11 ;
- un support d'enregistrement lisible sur lequel est enregistré le programme décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

Comme décrit précédemment, l'invention n'est bien sûr pas limitée à un élément de sécurité de type carte SIM. Par exemple, un module de sécurité conforme aux spécifications GlobalPlatform peut être utilisé. Dans ce cas, les moyens définis précédemment, notamment les moyens d'envoi et de réception utilisent les interfaces de communication définies par cet organisme. Dans un autre exemple de réalisation, l'élément de sécurité est un dispositif logiciel géré dans une base de données de dispositifs logiciels d'abonnés, la base étant protégée par des mesures physiques. Les moyens d'envoi et de réception utilisent alors les interfaces proposées par la base de données.

Une entité de confiance 12, selon un premier exemple de réalisation va maintenant être décrite en relation avec la figure 3.

Dans cet exemple de réalisation, l'entité de confiance 12 est un équipement informatique d'un opérateur de réseau mobile, agencé pour recevoir d'un élément de sécurité inséré dans un dispositif de type terminal mobile, via le réseau mobile de l'opérateur, des informations pour effectuer des traitements, et pour générer une application qui va s'authentifier auprès de l'élément de sécurité. Plus précisément, l'entité de confiance 12 comprend :
- un microprocesseur 12-1, ou CPU, destiné à charger des instructions en mémoire, à les exécuter, à effectuer des opérations ;
- un ensemble de mémoires, dont une mémoire volatile 12-2, ou RAM utilisée pour exécuter des instructions de code, stocker des variables, etc., et une mémoire de stockage 12-3 de type EEPROM. La mémoire de stockage 12-3 est en particulier agencée pour mémoriser le code du compilateur utilisé pour générer l'application authentifiable P3, mémoriser des informations sur les utilisateurs abonnés ;
- des moyens de réception 12-4, agencés pour recevoir l'aléa G de l'élément de sécurité. L'aléa G a été généré par l'élément de sécurité sur réception d'une première demande d'exécution de l'application sécurisée P1 hébergée par l'élément de sécurité. La première demande d'exécution de l'application sécurisée émane d'une deuxième application externe à l'élément de sécurité. Par exemple, la deuxième application est hébergée par le terminal mobile dans lequel l'élément de sécurité est inséré ;
- des premiers moyens de génération 12-5, agencés pour générer une clé de session Kₛₑₛₛ dépendant de l'aléa,
- des deuxièmes moyens de génération 12-6, agencés pour générer une application authentifiable P3 au moyen de la clé de session,
- des moyens d'envoi 12-7, agencés pour envoyer l'application authentifiable P3 au terminal mobile. L'application authentifiable est agencée pour s'authentifier auprès de la l'application sécurisée lors d'une deuxième demande d'exécution de l'application sécurisée.

Les premiers moyens de réception 12-4, les deuxièmes moyens de réception 12-5, les moyens de génération 12-6 et les moyens d'envoi 12-7 sont de préférence des modules logiciels comprenant des instructions logicielles pour faire exécuter les étapes du procédé de transmission d'une application authentifiable précédemment décrit.

L'invention concerne donc aussi :
- un programme d'ordinateur comportant des instructions pour la mise en oeuvre du procédé de transmission d'une application authentifiable tel que décrit précédemment lorsque ce programme est exécuté par un processeur de l'entité de confiance 12 ;
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

L'invention concerne également un système de sécurisation de l'exécution d'une application qui comprend une entité de confiance selon l'invention et au moins un dispositif sécurisé selon l'invention.

## Revendications

1. Procédé de sécurisation d'une demande d'exécution d'une première application (P1) par une deuxième application (P2), la première application étant destinée à être exécutée par un premier dispositif (11) dans un premier environnement sécurisé, la deuxième application étant destinée à être exécutée par un deuxième dispositif (10) dans un deuxième environnement, distinct du premier environnement, ledit procédé comprenant les étapes suivantes, mises en oeuvre par le premier dispositif :
- réception (E2) d'une première demande d'exécution de la première application (REQU_P1), en provenance de la deuxième application (P2),
- génération (E4) d'un aléa (G) pour ladite première demande d'exécution et d'une clé de session (Kₛₑₛₛ) dépendant de l'aléa généré,
- envoi (E5) dudit aléa à une entité de confiance (12), ledit aléa étant destiné à permettre à l'entité de confiance de générer la clé de session,
- réception (E14) d'une deuxième demande d'exécution de la première application (REQU_AUTH_P1), en provenance d'une troisième application (P3) générée par l'entité de confiance et transmise au deuxième dispositif, ladite troisième application comprenant la clé de session et étant apte à s'interfacer avec la première application, et
- authentification (E15) de la troisième application au moyen de la clé de session, ladite authentification conditionnant l'exécution de la première application.

2. Procédé selon la revendication 1, comprenant en outre une étape de génération d'un crypto-système (C), ledit crypto-système étant utilisé durant l'étape d'authentification.

3. Procédé selon la revendication 2, dans lequel la génération du crypto-système comprend :
- une étape de sélection d'au moins deux fonctions cryptographiques parmi un ensemble de fonctions cryptographiques, ladite sélection étant fonction de l'aléa (G), et
- une étape de composition desdites opérations cryptographiques.

4. Procédé de transmission d'une application authentifiable (P3) à un premier dispositif (10) dans un premier environnement, comprenant les étapes suivantes, mises en oeuvre par une entité de confiance (12) :
- réception (E6) d'un aléa (G) en provenance d'un deuxième dispositif (11) dans un deuxième environnement, ledit deuxième environnement étant sécurisé et distinct du premier environnement, ledit aléa étant généré pour une première demande d'exécution d'une première application (P1) du deuxième dispositif, en provenance d'une deuxième application (P2) du premier dispositif,
- génération (E7) d'une clé de session (Kₛₑₛₛ) dépendant de l'aléa,
- génération (E8) d'une application authentifiable (P3) au moyen de la clé de session,
- envoi (E9) de ladite application authentifiable au premier dispositif, ladite troisième application étant agencée pour s'authentifier auprès de la première application lors d'une deuxième demande d'exécution de la première application.

5. Procédé selon la revendication 4, comprenant en outre :
- l'envoi à un serveur d'un fournisseur de données de configuration, d'une demande de paramètres de configuration propres à un utilisateur du premier dispositif,
- la réception de données de configuration, lesdits paramètres de configuration étant utilisés pour personnaliser l'application authentifiable durant l'étape de génération de l'application authentifiable.

6. Dispositif sécurisé (11), hébergeant une première application (P1), le dispositif comprenant :
- des moyens de réception (11-4), agencés pour recevoir une première demande d'exécution de la première application, en provenance d'une deuxième application, la deuxième application étant hébergée par un deuxième dispositif (10), distinct du dispositif sécurisé, et pour recevoir une deuxième demande d'exécution de la première application en provenance d'une troisième application générée par une entité de confiance (12) et transmise au deuxième dispositif, ladite troisième application comprenant une clé de session et étant apte à s'interfacer avec la première application,
- des moyens de génération (11-5), agencés pour générer un aléa (G) pour la première demande d'exécution et la clé de session dépendant de l'aléa généré,
- des moyens d'envoi (11-6), agencés pour envoyer ledit aléa à l'entité de confiance, ledit aléa étant destiné à permettre à l'entité de confiance de générer la clé de session,
- des moyens d'authentification (11-7), agencés pour authentifier la troisième application au moyen de la clé de session, l'authentification de la troisième application conditionnant l'exécution de la première application.

7. Terminal mobile (10) comprenant un dispositif sécurisé selon la revendication 6.

8. Entité de confiance (12) d'un réseau, agencée pour générer et transmettre une application authentifiable (P3) à un premier dispositif (10) d'un premier environnement, ladite entité comprenant :
- des moyens de réception (12-4), agencés pour recevoir un aléa (G) en provenance d'un deuxième dispositif (11) dans un deuxième environnement, ledit deuxième environnement étant sécurisé et distinct du premier environnement, ledit aléa étant généré pour une première demande d'exécution d'une première application (P1) du deuxième dispositif, en provenance d'une deuxième application (P2) du premier dispositif,
- des premiers moyens de génération (12-5), agencés pour générer une clé de session (Kₛₑₛₛ) dépendant de l'aléa,
- des deuxièmes moyens de génération (12-6), agencés pour générer une application authentifiable (P3) au moyen de la clé de session,
- des moyens d'envoi (12-7), agencés pour envoyer ladite application authentifiable au premier dispositif, ladite troisième application étant agencée pour s'authentifier auprès de la première application lors d'une deuxième demande d'exécution de la première application.

9. Système de sécurisation de l'exécution d'une application, comprenant :
- une entité de confiance selon la revendication 8, et
- au moins un dispositif sécurisé selon la revendication 6.

10. Programme sur un support de données et chargeable dans une mémoire d'un dispositif sécurisé, le programme comprenant des portions de code pour l'exécution des étapes du procédé de sécurisation d'une demande d'exécution d'une première application par une deuxième application selon l'une des revendications 1 à 3, lorsque le programme est exécuté sur ledit dispositif.

11. Support de données sur lequel est enregistré le programme selon la revendication 10.

12. Programme sur un support de données et chargeable dans une mémoire d'un ordinateur, le programme comprenant des portions de code pour l'exécution des étapes du procédé de transmission d'une application authentifiable selon l'une des revendications 4 à 5, lorsque le programme est exécuté sur ledit ordinateur.

13. Support de données sur lequel est enregistré le programme d'ordinateur selon la revendication 12.

## Patentansprüche

1. Verfahren zur Sicherung einer Anfrage zur Ausführung einer ersten Anwendung (P1) durch eine zweite Anwendung (P2), wobei die erste Anwendung dazu bestimmt ist, von einer ersten Vorrichtung (11) in einer sicheren ersten Umgebung ausgeführt zu werden, wobei die zweite Anwendung dazu bestimmt ist, von einer zweiten Vorrichtung (10) in einer zweiten Umgebung, die von der ersten Umgebung verschieden ist, ausgeführt zu werden, wobei das Verfahren die folgenden Schritte umfasst, die von der ersten Vorrichtung durchgeführt werden:
- Empfang (E2) einer ersten Anfrage zur Ausführung der ersten Anwendung (REQU_P1) von der zweiten Anwendung (P2),
- Erzeugung (E4) einer Zufallszahl (G) für die erste Anfrage zur Ausführung und eines Sitzungsschlüssels (Kₛₑₛₛ), der von der erzeugten Zufallszahl abhängig ist,
- Senden (E5) der Zufallszahl an eine vertrauenswürdige Instanz (12), wobei die Zufallszahl dazu bestimmt ist, der vertrauenswürdigen Instanz zu ermöglichen, den Sitzungsschlüssel zu erzeugen,
- Empfang (E14) einer zweiten Anfrage zur Ausführung der ersten Anwendung (REQU_AUTH_P1) von einer dritten Anwendung (P3), die von der vertrauenswürdigen Instanz erzeugt und zu der zweiten Vorrichtung übertragen wurde, wobei die dritte Anwendung den Sitzungsschlüssel umfasst und in der Lage ist, eine Verbindung mit der ersten Anwendung herzustellen, und
- Authentifizierung (E15) der dritten Anwendung mittels des Sitzungsschlüssels, wobei die Authentifizierung Voraussetzung für die Ausführung der ersten Anwendung ist.

2. Verfahren nach Anspruch 1, welches außerdem einen Schritt der Erzeugung eines Verschlüsselungssystems (C) umfasst, wobei das Verschlüsselungssystem während des Authentifizierungsschrittes verwendet wird.

3. Verfahren nach Anspruch 2, wobei die Erzeugung des Verschlüsselungssystems umfasst:
- einen Schritt der Auswahl wenigstens zweier kryptographischer Funktionen aus einer Menge kryptographischer Funktionen, wobei die Auswahl in Abhängigkeit von der Zufallszahl (G) erfolgt, und
- einen Schritt der Erstellung der kryptographischen Operationen.

4. Verfahren zur Übertragung einer authentifizierbaren Anwendung (P3) zu einer ersten Vorrichtung (10) in einer ersten Umgebung, welches die folgenden Schritte umfasst, die von einer vertrauenswürdigen Instanz durchgeführt werden:
- Empfang (E6) einer Zufallszahl (G) von einer zweiten Vorrichtung (11) in einer zweiten Umgebung, wobei die zweite Umgebung sicher und von der ersten Umgebung verschieden ist, wobei die Zufallszahl für eine erste Anfrage zur Ausführung einer ersten Anwendung (P1) der zweiten Vorrichtung erzeugt wird, die von einer zweiten Anwendung (P2) der ersten Vorrichtung stammt,
- Erzeugung (E7) eines Sitzungsschlüssels (Kₛₑₛₛ), der von der Zufallszahl abhängig ist,
- Erzeugung (E8) einer authentifizierbaren Anwendung (P3) mittels des Sitzungsschlüssels,
- Senden (E9) der authentifizierbaren Anwendung an die erste Vorrichtung, wobei die dritte Anwendung dafür ausgelegt ist, sich bei einer zweiten Anfrage zur Ausführung der ersten Anwendung bei der ersten Anwendung zu authentifizieren.

5. Verfahren nach Anspruch 4, welches außerdem umfasst:
- das Senden, an einen Server eines Lieferanten von Konfigurationsdaten, einer Anforderung von Konfigurationsparametern, die einem Benutzer der ersten Vorrichtung eigen sind,
- den Empfang von Konfigurationsdaten, wobei die Konfigurationsparameter verwendet werden, um die authentifizierbare Anwendung während des Schrittes der Erzeugung der authentifizierbaren Anwendung zu personalisieren.

6. Sichere Vorrichtung (11), welche eine erste Anwendung (P1) hostet, wobei die Vorrichtung umfasst:
- Empfangsmittel (11-4), die dafür ausgelegt sind, eine erste Anfrage zur Ausführung der ersten Anwendung von einer zweiten Anwendung zu empfangen, wobei die zweite Anwendung von einer zweiten Vorrichtung (10) gehostet wird, die von der sicheren Vorrichtung verschieden ist, und eine zweite Anfrage zur Ausführung der ersten Anwendung von einer dritten Anwendung zu empfangen, die von einer vertrauenswürdigen Instanz (12) erzeugt und zu der zweiten Vorrichtung übertragen wurde, wobei die dritte Anwendung einen Sitzungsschlüssel umfasst und in der Lage ist, eine Verbindung mit der ersten Anwendung herzustellen,
- Erzeugungsmittel (11-5), die dafür ausgelegt sind, eine Zufallszahl (G) für die erste Anfrage zur Ausführung und den Sitzungsschlüssel, der von der erzeugten Zufallszahl abhängig ist, zu erzeugen,
- Sendemittel (11-6), die dafür ausgelegt sind, die Zufallszahl an die vertrauenswürdige Instanz zu senden, wobei die Zufallszahl dazu bestimmt ist, der vertrauenswürdigen Instanz zu ermöglichen, den Sitzungsschlüssel zu erzeugen,
- Authentifizierungsmittel (11-7), die dafür ausgelegt sind, die dritte Anwendung mittels des Sitzungsschlüssels zu authentifizieren, wobei die Authentifizierung der dritten Anwendung Voraussetzung für die Ausführung der ersten Anwendung ist.

7. Endgerät (10), welches eine sichere Vorrichtung nach Anspruch 6 umfasst.

8. Vertrauenswürdige Instanz (12) eines Netzes, die dafür ausgelegt ist, eine authentifizierbare Anwendung (P3) zu erzeugen und zu einer ersten Vorrichtung (10) einer ersten Umgebung zu übertragen, wobei die Instanz umfasst:
- Empfangsmittel (12-4), die dafür ausgelegt sind, eine Zufallszahl (G) von einer zweiten Vorrichtung (11) in einer zweiten Umgebung zu empfangen, wobei die zweite Umgebung sicher und von der ersten Umgebung verschieden ist, wobei die Zufallszahl für eine erste Anfrage zur Ausführung einer ersten Anwendung (P1) der zweiten Vorrichtung erzeugt wird, die von einer zweiten Anwendung (P2) der ersten Vorrichtung stammt,
- erste Erzeugungsmittel (12-5), die dafür ausgelegt sind, einen Sitzungsschlüssels (Kₛₑₛₛ) zu erzeugen, der von der Zufallszahl abhängig ist,
- zweite Erzeugungsmittel (12-6), die dafür ausgelegt sind, eine authentifizierbare Anwendung (P3) mittels des Sitzungsschlüssels zu erzeugen,
- Sendemittel (12-7), die dafür ausgelegt sind, die authentifizierbare Anwendung an die erste Vorrichtung zu senden, wobei die dritte Anwendung dafür ausgelegt ist, sich bei einer zweiten Anfrage zur Ausführung der ersten Anwendung bei der ersten Anwendung zu authentifizieren.

9. System zur Sicherung der Ausführung einer Anwendung, welches umfasst:
- eine vertrauenswürdige Instanz nach Anspruch 8 und
- wenigstens eine sichere Vorrichtung nach Anspruch 6.

10. Programm auf einem Datenträger, das in einen Speicher einer sicheren Vorrichtung ladbar ist, wobei das Programm Codeabschnitte zur Ausführung der Schritte des Verfahrens zur Sicherung einer Anfrage zur Ausführung einer ersten Anwendung durch eine zweite Anwendung nach einem der Ansprüche 1 bis 3, wenn das Programm auf der Vorrichtung ausgeführt wird, umfasst.

11. Datenträger, auf welchem das Programm nach Anspruch 10 aufgezeichnet ist.

12. Programm auf einem Datenträger, das in einen Speicher eines Computers ladbar ist, wobei das Programm Codeabschnitte zur Ausführung der Schritte des Verfahrens zur Übertragung einer authentifizierbaren Anwendung nach einem der Ansprüche 4 bis 5, wenn das Programm auf dem Computer ausgeführt wird, umfasst.

13. Datenträger, auf welchem das Computerprogramm nach Anspruch 12 aufgezeichnet ist.

## Claims

1. Method for securing a request for execution of a first application (P1) by a second application (P2), the first application being intended to be executed by a first device (11) in a first secure environment, the second application being intended to be executed by a second device (10) in a second environment, distinct from the first environment, said method comprising the following steps, implemented by the first device:
- reception (E2) of a first request for execution of the first application (REQU_P1), originating from the second application (P2),
- generation (E4) of a random item (G) for said first execution request and of a session key (Kₛₑₛₛ) dependent on the random item generated,
- dispatching (E5) of said random item to a trusted entity (12), said random item being intended to allow the trusted entity to generate the session key,
- reception (E14) of a second request for execution of the first application (REQU_AUTH_P1), originating from a third application (P3) generated by the trusted entity and transmitted to the second device, said third application comprising the session key and being able to interface with the first application, and
- authentication (E15) of the third application by means of the session key, said authentication conditioning the execution of the first application.

2. Method according to Claim 1, furthermore comprising a step of generating a crypto-system (C), said crypto-system being used during the authentication step.

3. Method according to Claim 2, in which the generation of the crypto-system comprises:
- a step of selecting at least two cryptographic functions from among a set of cryptographic functions, said selection being dependent on the random item (G), and
- a step of compounding said cryptographic operations.

4. Method for transmitting an authenticatable application (P3) to a first device (10) in a first environment, comprising the following steps, implemented by a trusted entity (12):
- reception (E6) of a random item (G) originating from a second device (11) in a second environment, said second environment being secure and distinct from the first environment, said random item being generated for a first request for execution of a first application (P1) of the second device, originating from a second application (P2) of the first device,
- generation (E7) of a session key (Kₛₑₛₛ) dependent on the random item,
- generation (E8) of an application authenticatable (P3) by means of the session key,
- dispatching (E9) of said authenticatable application to the first device, said third application being designed to authenticate itself with the first application upon a second request for execution of the first application.

5. Method according to claim 4, furthermore comprising:
- the dispatching to a server of a provider of configuration data, of a request for configuration parameters which are specific to a user of the first device,
- the receipt of configuration data, said configuration parameters being used to customize the authenticatable application during the step of generating the authenticatable application.

6. Secure device (11), hosting a first application (P1), the device comprising:
- reception means (11-4), designed to receive a first request for execution of the first application, originating from a second application, the second application being hosted by a second device (10), distinct from the secure device, and to receive a second request for execution of the first application originating from a third application generated by a trusted entity (12) and transmitted to the second device, said third application comprising a session key and being able to interface with the first application,
- generating means (11-5), designed to generate a random item (G) for the first execution request and the session key dependent on the random item generated,
- dispatching means (11-6), designed to dispatch said random item to the trusted entity, said random item being intended to allow the trusted entity to generate the session key,
- authentication means (11-7), designed to authenticate the third application by means of the session key, the authentication of the third application conditioning the execution of the first application.

7. Terminal (10) comprising a secure device according to Claim 6.

8. Trusted entity (12) of a network, said entity being designed to generate and transmit an authenticatable application (P3) to a first device (10) of a first environment, and comprising:
- reception means (12-4), designed to receive a random item (G) originating from a second device (11) in a second environment, said second environment being secure and distinct from the first environment, said random item being generated for a first request for execution of a first application (P1) of the second device, originating from a second application (P2) of the first device,
- first generating means (12-5), designed to generate a session key (Kₛₑₛₛ) dependent on the random item,
- second generating means (12-6), designed to generate an application authenticatable (P3) by means of the session key,
- dispatching means (12-7), designed to dispatch said authenticatable application to the first device, said third application being designed to authenticate itself with the first application upon a second request for execution of the first application.

9. System for securing the execution of an application, comprising:
- a trusted entity according to Claim 8, and
- at least one secure device according to Claim 6.

10. Program on a data medium and loadable into a memory of a secure device, the program comprising code portions for the execution of the steps of the method for securing a request for execution of a first application by a second application according to one of Claims 1 to 3, when the program is executed on said device.

11. Data medium on which the program according to Claim 10 is recorded.

12. Program on a data medium and loadable into a memory of a computer, the program comprising code portions for the execution of the steps of the method for transmitting an authenticatable application according to either one of Claims 4 and 5, when the program is executed on said computer.

13. Data medium on which the computer program according to Claim 12 is recorded.
